# EUROPÄISCHE PATENTSCHRIFT

(11) **EP 3 049 295 B1**
(45) Veröffentlichungstag und Bekanntmachung des Hinweises auf die Patenterteilung: **30.05.2018**
(21) Anmeldenummer: 14776868.3
(22) Anmeldetag: 26.09.2014
(51) Int. Cl.: B60T 8/40, B60T 8/48

(54) **VERFAHREN ZUR STEUERUNG EINES BREMSSYSTEMS UND BREMSSYSTEM IN DEM DAS VERFAHREN DURCHGEFÜHRT WIRD.**
METHOD FOR CONTROLLING A BRAKE SYSTEM, AND BRAKE SYSTEM IN WHICH THE METHOD IS CARRIED OUT
PROCÉDÉ DE COMMANDE D'UN SYSTÈME DE FREINAGE ET SYSTÈME DE FREINAGE DANS LEQUEL ON MET EN UVRE LE PROCÉDÉ

(30) Priorität: 26.09.2013 DE 102013219458
(43) Veröffentlichungstag der Anmeldung: 03.08.2016
(73) Patentinhaber: Continental Teves AG & Co. OHG, 60488 Frankfurt (DE)
(72) Erfinder: ROSS, Scott F., 61449 Steinbach (DE); SCHÖNBOHM, Alexander, 61231 Bad Nauheim (DE); MATHIS, Florian, 66763 Dillingen (DE)
(86) Internationale Anmeldenummer: PCT/EP2014/070686
(87) Internationale Veröffentlichungsnummer: WO 2015/044383

(56) Entgegenhaltungen:
- WO-A1-97/13670
- WO-A1-99/20509
- WO-A1-2011/092308
- DE-A1- 19 604 134
- DE-A1-102004 029 838
- DE-A1-102006 036 679

## Beschreibung

Die Erfindung betrifft ein Verfahren gemäß Oberbegriff von Anspruch 1 und ein Bremssystem gemäß Oberbegriff von Anspruch 8.

Hybridfahrzeuge, welche durch einen Verbrennungsmotor und eine oder mehrere elektrische Maschinen angetrieben werden, oder rein elektrisch angetriebene Fahrzeuge können während einer Bremsung die elektrische Maschine/n als Generator betreiben, um die kinetische Energie des Fahrzeugs in elektrische Energie umzuwandeln und zweckmäßigerweise in einer Batterie zu speichern.

Aus der WO 2011/092308 A1 ist ein Bremssystem für ein Kraftfahrzeug bekannt, das mindestens eine elektrisch-regenerative Bremse und ein Druckmittel-betriebenes Bremssystem mit Radbremsen aufweist, wobei die den einzelnen Rädern zugeordneten Radbremsen in zwei Bremskreisen angeordnet sind, welche von einem ersten Bremsdruckerzeugungsmittel, einem Tandemhauptbremszylinder, mit Druckmittel beaufschlagbar sind, und wobei jeder Bremskreis zumindest einen Druckspeicher und elektronisch ansteuerbare Hydraulikventile umfasst, und wobei das Bremssystem eine elektronische Steuer- und Regeleinheit umfasst, durch welche bei einem Bremsen mit der oder den elektrisch-regenerativen Bremse mindestens ein Hydraulikventil derart angesteuert wird, dass zu einem Zeitpunkt Druckmittel in genau einen, insbesondere vorbestimmten, Druckspeicher abgeleitet wird. Somit wird zu Beginn einer Bremsung ein Druckspeicher gefüllt, um auch während eines Generatorbetriebs der elektrischen Maschine/n für den Fahrer das gewohnte Pedalgefühl bereitzustellen. Sobald der erste Druckspeicher einen vorgegebenen Füllstand aufweist, wird vorzugsweise Druckmittel in den Druckspeicher des zweiten Bremskreises abgeleitet. Die abgeleitete Menge an Druckmittel bzw. Bremsflüssigkeit trägt nicht zur Druckerhöhung in den Radbremsen der Fahrzeugräder bei und kann abhängig von dem jeweils umsetzbaren Generatormoment, dem Fahrerbremswunsch und der Bremskreisaufteilung variieren.

Ein auf Induktion basierender Generator verliert seine Bremswirkung bei niedrigen Geschwindigkeiten nahezu vollständig, weshalb mit Hilfe der Radbremsen das fehlende Schleppmoment des Generators ausgeglichen werden muss. Dieser auch als Blending bezeichnete Übergang zwischen Schleppmoment des Generators und Bremsmoment der Radbremsen erfolgt häufig, indem über eine aus dem Druckspeicher gespeiste Pumpe Druck in den Radbremsen aufgebaut wird, wobei die Pumpen beider Bremskreise meist mit einem gemeinsamen Motor betrieben werden. Je nach Bremskreisaufteilung, momentan verfügbarem Generatormoment und Fahrerbremswunsch kann es systembedingt vorkommen, das nicht beide Niederdruckspeicher eine äquivalente Menge Bremsflüssigkeit enthalten. Dies hat zur Folge, das während die Pumpe in einem Bremskreis noch fördert, in dem anderen Bremskreis das förderbare Volumen erschöpft ist und ein Unterdruck entsteht, in dem sich auch Dampfblasen ausbilden können. Nach dem zitierten Stand der Technik wird ein entstandener Unterdruck mit einem kurzzeitigen Öffnen des zwischen Druckspeicher und Hauptbremszylinder angeordneten elektronischen Umschaltventils abgebaut, sobald die Bremsbetätigung beendet ist; dies wird auch als EUV-Entgasungspuls bezeichnet.

Aus der DE 10 2004 029 838 A1 ist ein Verfahren bekannt, bei welchem nach dem Ende der elektrischen Ansteuerung einer Rückförderpumpe ein Hydraulikventil, welches einen Durchfluss von Hydraulikmedium zwischen einem Hauptbremszylinder und der Saugseite der Pumpe steuert, geöffnet wird und über ein vorgegebenes Zeitintervall geöffnet bleibt.

Ein entsprechendes Blending tritt auch bei einer sanften Bremsung auf, in welcher das Fahrzeug mit einer geringen Verzögerung bis in den Stillstand gebremst wird. Wegen der sanften Bremsung werden die Niederdruckspeicher nur teilweise befüllt, und auch bei einer Aktivierung der Pumpe mit geringer Drehzahl würde in einem Bremskreis über einen längeren Zeitraum ein Unterdruck auf der Saugseite der Hydraulikpumpe anliegen, was schädliche Auswirkungen auf den Entlüftungszustand des Bremssystems haben kann.

Aufgabe der vorliegenden Erfindung ist es daher, auch während einer sanften Bremsung einen Unterdruck auf der Saugseite einer Hydraulikpumpe abzubauen bzw. zu verhindern.

Diese Aufgabe wird erfindungsgemäß durch ein Verfahren mit den Merkmalen von Anspruch 1 gelöst.

Es wird also ein Verfahren bereitgestellt, bei dem ein Bremssystem für ein Kraftfahrzeug gesteuert und/oder geregelt wird, das mindestens eine elektrisch-regenerative Bremse und eine oder mehrere, insbesondere vier, Radbremsen umfasst, welche von einer vom Fahrer mittels eines Bremspedals betätigbaren ersten Druckquelle, insbesondere einem Tandemhauptbremszylinder, mit Druckmittel beaufschlagbar und in einem oder mehreren, insbesondere zwei, Bremskreisen angeordnet sind, wobei mindestens ein Bremskreis einen Druckspeicher, eine saugseitig mit dem Druckspeicher verbundene zweite Druckquelle, insbesondere eine elektrische Hydraulikpumpe, und mindestens zwei ansteuerbare Ventile aufweist, wobei sobald eine Aktivierungsbedingung erfüllt ist, in mindestens einem aktiven Bremskreis die erste Druckquelle durch Schließen eines ersten Ventils, insbesondere eines stromlos geöffneten Magnetventils, von den Radbremsen getrennt wird und mittels einer Aktivierung der zweiten Druckquelle Druckmittel aus dem Druckspeicher in mindestens eine Radbremse gefördert wird. Die Aktivierungsbedingung ist erfüllt, wenn das von der elektrisch-regenerativen Bremse aufgebaute und/oder erzielbare Bremsmoment einen vorgegebenen Schwellenwert unterschreitet. Sinkt bei unveränderter Bremsbetätigung durch den Fahrer das aufgebaute Bremsmoment des Generators, so ist ein Blending bzw. eine Aktivierung der Hydraulikpumpe erforderlich. Erfindungsgemäß wird während des Betriebs der zweiten Druckquelle ein zwischen dem Druckspeicher und der ersten Druckquelle angeordnetes zweites Ventil, insbesondere ein stromlos geschlossenes Magnetventil, eines des/der aktiven Bremskreise/s sowie das erste Ventil desselben Bremskreises geöffnet wird, wenn eine Entlüftungsbedingung erfüllt ist. Indem die zweite Druckquelle bzw. Pumpe bei geöffnetem erstem und zweitem Ventil betrieben wird, wird verhindert, dass über einen längeren Zeitraum ein Vakuum an der Saugseite der Pumpe anliegt. Somit wird eine Bildung von Gasblasen in der Bremsflüssigkeit vermieden. Hierbei erfolgt nur eine geringe zusätzliche Belastung der Ventile durch Schaltvorgänge.

Erfindungsgemäß ist die Entlüftungsbedingung nur dann erfüllt, wenn in einem vorgegebenen Zeitpunkt oder für eine vorgegebene Zeitdauer nach Erfüllung der Aktivierungsbedingung und/oder Aktivierung der zweiten Druckquelle die Betätigung eines vom Fahrer betätigten Bremspedals in einem vorgegebenen Intervall liegt. Eine Bremsbetätigung in dem vorgegebenen Intervall bedeutet zweckmäßigerweise, dass der Fahrer eine sanfte Bremsung durchführt, bei der er das Bremspedal dauerhaft getreten hält.

Um das Maß einer Betätigung des Bremspedals zu ermitteln, wird insbesondere ein mit dem Bremspedal verbundener Weg- oder Winkelsensor betrachtet. Unter Wegsensor wird hierbei auch ein Schalter verstanden, dessen Schaltzustand sich bei einem vorgegebenen Maß der Betätigung des Bremspedals ändert. Alternativ oder zur Plausibilisierung kann das Maß der Betätigung des Bremspedals auch anhand eines mit der ersten Druckquelle hydraulisch verbundenen Drucksensors und/oder an einer mit Hilfe von Raddrehzahlsensoren bestimmten Fahrzeugverzögerung ermittelt werden.

Besonders zweckmäßigerweise kann es auch vorgesehen sein, dass die Entlüftungsbedingung nur dann erfüllt ist, wenn der Druckspeicher mindestens eines ersten Bremskreises weniger als ein vorgegebenes Volumen an Druckmittel enthält und/oder die zweite Druckquelle mindestens eines ersten Bremskreises während mindestens einer vorgegebenen Zeitdauer Druckmittel gefördert hat. Somit wird sichergestellt, dass eine Ventilbetätigung nur bei Bedarf erfolgt.

Bevorzugt ist die Aktivierungsbedingung erfüllt, wenn die Betätigung eines vom Fahrer betätigten Bremspedals ein vorgegebenes Maß überschreitet, wobei insbesondere ein mit dem Bremspedal verbundener Weg- oder Winkelsensor oder Schalter betrachtet wird.

Umfasst das Bremssystem einen ersten und einen zweiten Bremskreis, welche jeweils einen Druckspeicher, eine zweite Druckquelle, ein ansteuerbares erstes Ventil, welches zwischen erster Druckquelle und Radbremsen angeordnet ist, insbesondere ein stromlos geöffnetes Magnetventil, ein ansteuerbares zweites Ventil, welches zwischen Druckspeicher und erster Druckquelle angeordnet ist, insbesondere ein stromlos geschlossenes Magnetventil, und mindestens ein ansteuerbares drittes Ventil, welches zwischen Radbremse und Druckspeicher angeordnet ist, insbesondere ein stromlos geschlossenes Magnetventil, aufweisen, so ist es zweckmäßig, wenn während eines Bremsvorgangs durch Öffnen eines dritten Ventils Druckmittel zuerst in den Druckspeicher des ersten Bremskreises und anschließend in den Druckspeicher des zweiten Bremskreises abgeleitet wird. Durch die sequentielle Befüllung kann genau ermittelt werden, wie viel Druckmittel in dem Druckspeicher des ersten und des zweiten Bremskreises abgeleitet wurde. Vorzugsweise kann die Aktivierungsbedingung nur dann erfüllt sein, wenn zumindest in den Druckspeicher des ersten Bremskreises Druckmittel abgeleitet wurde. Dies verhindert eine Pumpenbetätigung bei von Anfang an leeren Druckspeichern.

Wenn (z.B. aufgrund der Konstruktion der Pumpe) die zweite Druckquelle des ersten und des zweiten Bremskreises gleichzeitig aktiviert werden, so ist es besonders zweckmäßig, dass bei Erfüllung der Entlüftungsbedingung das zweite Ventil und das erste Ventil des Bremskreises geöffnet werden, welcher den Druckspeicher mit dem geringeren Füllstand aufweist. Der andere Bremskreis kann weiterhin ein abnehmendes Generatormoment kompensieren, gleichzeitig wird die Anzahl zusätzlicher Ventilbetätigungen begrenzt und somit die Lebensdauer des Bremssystems gesichert.

Der Füllstand eines Druckspeichers wird insbesondere anhand einer Dauer und/oder eines Öffnungsquerschnitts und/oder eines Ventilstroms des zumindest zeitweise geöffneten zweiten Ventils und/oder einer Dauer der Aktivierung und/oder einer die Druckerzeugung charakterisierenden Größe, vorzugsweise einer Drehzahl, der zweiten Druckquelle ermittelt wird. Beispielsweise können die Signale eines Rotorpositionssensors des elektrischen Antriebs der Hydraulikpumpe betrachtet werden, um z.B. die Drehzahl des Antriebs als die Druckerzeugung charakterisierende Größe zu betrachten.

Es ist besonders zweckmäßig, wenn die zweiten Ventile sowohl des ersten als auch des zweiten Bremskreises kurzzeitig geöffnet werden, nachdem das Bremspedal nicht mehr betätigt wird und/oder die zweiten Druckquellen deaktiviert wurden, was insbesondere anhand eines mit dem Bremspedal verbundenen Weg- oder Winkelsensor erkannt wird. Nach jedem Blending ist es sinnvoll, wenn nach dem Lösen des Bremspedals noch ein Schalten des elektronischen Umschaltventils erfolgt. Somit ist ein Druckausgleich zwischen Niederdruckspeicher und Tandemhauptzylinder bzw. Reservoir gewährleistet.

Es kann bevorzugt auch vorgesehen sein, dass bei erfüllter Entlüftungsbedingung auch das erste Ventil des Bremskreises geöffnet wird, welcher den Druckspeicher mit dem höheren Füllstand aufweist. Dies hat den Vorteil, dass auch geringe Druckunterschiede zwischen den Bremskreisen verhindert werden.

Die Erfindung betrifft weiterhin ein Bremssystem für ein Kraftfahrzeug, welches mindestens eine elektrisch-regenerative Bremse und eine oder mehrere, insbesondere vier, Radbremsen umfasst, welche von einer vom Fahrer mittels eines Bremspedals betätigbaren ersten Druckquelle, insbesondere einem Tandemhauptbremszylinder, mit Druckmittel beaufschlagbar und in einem oder mehreren, insbesondere zwei, Bremskreisen angeordnet sind, wobei mindestens ein Bremskreis einen Druckspeicher, eine zweites Druckquelle, insbesondere eine elektrische Hydraulikpumpe, und mindestens zwei ansteuerbare Ventile aufweist, und wobei das Bremssystem ein elektronisches Steuergerät aufweist, welches sobald eine Aktivierungsbedingung erfüllt ist, in mindestens einem aktiven Bremskreis die erste Druckquelle durch Schließen eines ersten Ventils von den Radbremsen trennt und die zweite Druckquelle aktiviert, wodurch Druckmittel aus dem Druckspeicher in mindestens eine Radbremse gefördert wird, wobei die Aktivierungsbedingung erfüllt ist, wenn das von der elektrisch-regenerativen Bremse aufgebaute und/oder erzielbare Bremsmoment ein vorgegebenen Schwellenwert unterschreitet, wobei das elektronische Steuergerät während des Betriebs der zweiten Druckquelle ein zwischen dem Druckspeicher und der ersten Druckquelle angeordnetes zweites Ventil eines des/der aktiven Bremskreise/s sowie das erste Ventil des selben Bremskreises öffnet, wenn eine Entlüftungsbedingung erfüllt ist, wobei die Entlüftungsbedingung nur dann erfüllt ist, wenn in einem vorgegebenen Zeitpunkt oder für eine vorgegebene Zeitdauer nach Erfüllung der Aktivierungsbedingung und/oder Aktivierung der zweiten Druckquelle die Betätigung eines vom Fahrer betätigten Bremspedals in einem vorgegebenen Intervall liegt, wobei insbesondere ein mit dem Bremspedal verbundener Weg- oder Winkelsensor betrachtet wird.

Gemäß einer bevorzugten Ausführungsform der Erfindung sind jeder Radbremse eines Bremskreises ein zwischen erster Druckquelle und Radbremse angeordnetes Einlassventil, insbesondere ein stromlos geöffnetes Magnetventil, und ein zwischen Radbremse und Druckspeicher angeordnetes Auslassventil zugeordnet, wobei die zweite Druckquelle eines Bremskreises saugseitig mit dem Druckspeicher verbunden ist und auslassseitig zwischen der ersten Druckquelle und den Einlassventilen des Bremskreises angeordnet ist, und wobei zwischen der Auslassseite der zweiten Druckquelle und der ersten Druckquelle ein Trennventil angeordnet ist, insbesondere ein stromlos geöffnetes Magnetventil, und dass zwischen Saugseite der zweiten Druckquelle und erster Druckquelle ein Umschaltventil, insbesondere ein stromlos geschlossenes Magnetventil, angeordnet ist, wobei das elektronische Steuergerät während der Durchführung eines erfindungsgemäßen Verfahrens in mindestens einem Bremskreis jeweils das Trennventil als das erste Ventil und das Umschaltventil als das zweite Ventil ansteuert.

Weist das Kraftfahrzeug zwei Achsen mit je zwei Rädern und zugeordneten Radbremsen auf, so können die Radbremsen der Vorderachse in einem ersten Bremskreis und die Radbremsen der Hinterachse in einem zweiten Bremskreis angeordnet sein, was auch als schwarz/weiß-Aufteilung bekannt ist. Gemäß einer ersten bevorzugten Ausführungsform des erfindungsgemäßen Bremssystems weist das Kraftfahrzeug also zwei Achsen mit je zwei Rädern und zugeordneten Radbremsen auf, wobei die Radbremsen der Vorderachse in einem ersten Bremskreis angeordnet sind und die Radbremsen der Hinterachse in einem zweiten Bremskreis angeordnet sind.

Alternativ kann bei einem entsprechenden vierrädrigen Kraftfahrzeug jeweils eine Radbremse der Vorderachse und eine Radbremse der Hinterachse in einem Bremskreis angeordnet sein, was auch als Diagonal-Aufteilung bezeichnet wird. Gemäß einer zweiten bevorzugten Ausführungsform des erfindungsgemäßen Bremssystems weist das Kraftfahrzeug zwei Achsen mit je zwei Rädern und zugeordneten Radbremsen auf, die in zwei Bremskreise aufgeteilt sind, wobei jeweils eine Radbremse der Vorderachse und eine Radbremse der Hinterachse in einem Bremskreis angeordnet sind.

Das erfindungsgemäße Verfahren ist prinzipiell unabhängig von der Bremssystem-Aufteilung einsetzbar. Bei einer sequentiellen Befüllung der Druckspeicher ist auch für eine Diagona-Aufteilung des Bremssystems einfach feststellbar, in welchem Bremskreis die Entlüftungsbedingung erfüllt ist.

Zweckmäßigerweise ist die zweite Druckquelle als elektrisch angetriebene Kolbenpumpe ausgeführt, welche einen mit dem Steuergerät verbundenen Rotorpositionssensor aufweist. Dies ermöglicht eine besonders genaue Ansteuerung der zweiten Druckquelle.

Weitere bevorzugte Ausführungsformen ergeben sich aus den Unteransprüchen und der nachfolgenden Beschreibung eines Ausführungsbeispiels an Hand einer Figur.

### Es zeigt

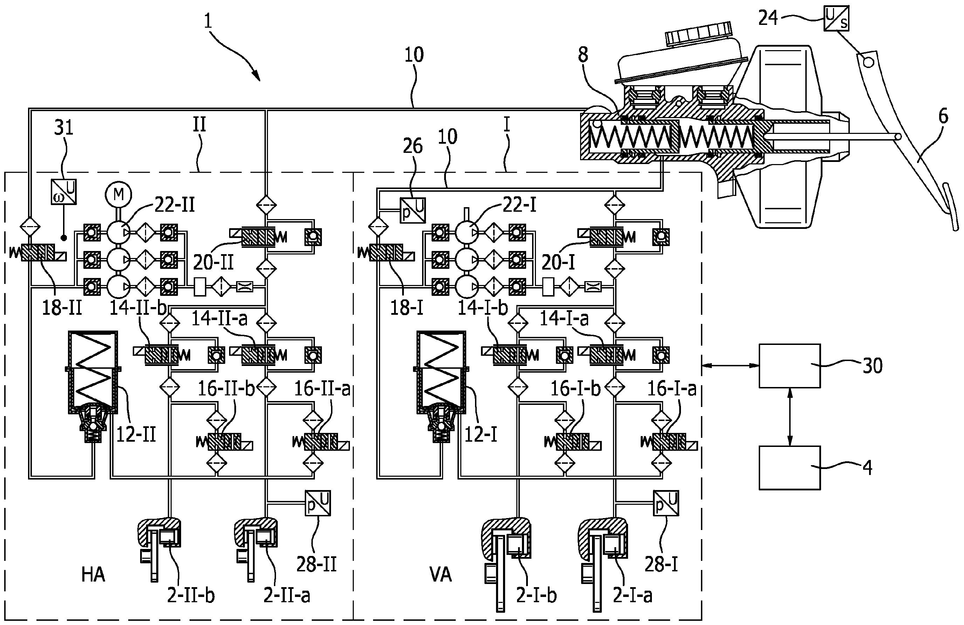

Fig. 1 ein Ausführungsbeispiel eines Bremssystems in unbetätigtem Zustand.

In Figur 1 ist ein Ausführungsbeispiel eines Bremssystems 1 für ein Kraftfahrzeug dargestellt, welches zur Durchführung des erfindungsgemäßen Verfahrens geeignet ist. Der Fahrer des Kraftfahrzeugs fordert über das Bremspedal 6 eine Verzögerung des Fahrzeugs an bzw. betätigt die Bremse. Um mittels der als Reibungsbremsen ausgeführten Radbremsen 2 ein Bremsmoment aufzubauen, ist das Bremssystem 1 mit einer ersten Druckquelle 8 versehen, die als Tandemhauptbremszylinder mit oder ohne Hilfskraft ausgelegt ist. Dabei wird der vom (Tandem-)Hauptbremszylinder 8 aufgebaute Bremsdruck über Hydraulikleitungen 10 mit einem Druckmittel an die Radbremsen 2 weitergegeben. Das Bremssystem 1 umfasst zwei Bremskreise I, II, wobei jeweils zwei Radbremsen 2-I-a, 2-I-b bzw. 2-II-a, 2-II-b des Fahrzeugs in einem Bremskreis I, II zusammengefasst sind. Der erste Bremskreis I ist mit den Radbremsen 2-I-a, 2-I-b der Vorderachse VA verbunden, an dem zweiten Bremskreis II sind die Radbremsen 2-II-a, 2-II-b der Hinterachse HA angeschlossen. Das erfindungsgemäße Verfahren kann jedoch mit denselben Schritten auch in einer Bremsanlage mit diagonaler Bremskreisaufteilung durchgeführt werden, wobei in dieser also jeweils eine Radbremse der Vorderachse VA und eine Radbremse der Hinterachse HA in einem Bremskreis I, II zusammengefasst sind.

Da bei dem in Figur 1 dargestellten Beispiel die beiden Bremskreise I, II hydraulisch im Wesentlichen identisch aufgebaut sind, werden im Folgenden nur die Komponenten des ersten Bremskreises I beschrieben. Eine vom Hauptbremszylinder 8 ausgehende Bremsleitung 10 verzweigt sich nach einem stromlos -also ohne elektrische Ansteuerung- offenen Trennventil 20-I in zwei zu den Radbremsen 2-I-a, 2-I-b der Vorderachse VA führende Bremsleitungen, in welchen jeweils ein stromlos offenes Einlassventil 14-I-a, 14-I-b vorgesehen ist. Zwischen jedem Einlassventil 14-I-a, 14-I-b und der entsprechenden Radbremse 2-I-a, 2-I-b geht von der jeweiligen Bremsleitung je eine Rückführleitung aus, in welcher je ein stromlos geschlossenes Auslassventil 16-I-a, 16-I-b angeordnet ist. Beide Rückführleitungen sind über ein gemeinsames Bremsleitungsstück an einen Druckspeicher 12-I angeschlossen. Bremskreis I weist eine durch einen elektrischen Antriebsmotor angetriebene Hydraulikpumpe 22 auf, die als zweite Druckquelle unabhängig von einer Bremsbetätigung des Fahrers Druck aufbauen kann. Die zweite Druckquelle 22 ist ansaugseitig mit dem Druckspeicher 12-I verbunden. Ausgangsseitig ist die Hydraulikpumpe 22 mit der Bremsleitung zwischen Trennventil 20-I und den Einlassventilen 14-I verbunden. Zwischen Druckspeicher 12-I und Saugseite der Pumpe 22 führt eine weitere Bremsleitung über ein stromlos geschlossenes elektronisches Umschaltventil 18-I zu der Bremsleitung zwischen Hauptbremszylinder 8 und Trennventil 20-I.

Bei dem Bremssystem 1 handelt es sich um ein regeneratives Bremssystem, das neben den hydraulisch betätigten Radbremsen 2 auch eine elektrische Maschine 4 aufweist, die zur Erzeugung von elektrischer Energie als Generator betrieben werden kann. Wenn also die elektrisch-regenerative Bremse 4 das Fahrzeug verzögert, kann eine Batterie des Fahrzeugs geladen werden, wobei im Sinne einer effizienten Energierückgewinnung währenddessen möglichst keine Betätigung der Radbremsen 2 erfolgt. Über einen Weggeber 24, der am Bremspedal 6 angeordnet ist, wird das Maß der Bremspedalbetätigung erfasst. Prinzipiell können aber auch andere Sensoren eingesetzt werden, die ein zur Bremsbetätigung durch den Fahrer proportionales Signal liefern. Zusätzlich ist zweckmäßigerweise ein Drucksensor 26 vorhanden, der sich an der zum Tandemhauptzylinder 8 führenden Hydraulikleitung 10 des Bremskreises I befindet und den Vordruck bestimmt. Wenn während einer Bremsung an einem (oder mehreren) der Räder eine deutliche Abnahme der gemessenen Radgeschwindigkeit auftritt, kann das Einlassventil der entsprechenden Radbremse geschlossen werden und eine Bremsschlupfregelung nach an sich bekannten Verfahren erfolgen. In einer bevorzugten Ausführungsform des Bremssystems wird der Bremsdruck an den Reibbremsen 2 eines Bremskreises über Drucksensoren 28-I, 28-II bestimmt, die jeweils in einer Hydraulikleitung einer Radbremse 2-I-a, 2-II-a angeordnet sind. In einer alternativen bevorzugten Ausführungsform des Bremssystems wird der Druck in den Radbremsen anhand eines an sich bekannten Modells geschätzt.

Zur Steuerung und/oder Regelung des Bremssystems 1 umfasst dieses ein elektronisches Steuergerät 30, welches die elektronisch steuerbaren Hydraulikventile 14, 16, 18, 20 sowie die Pumpe 22 ansteuert. Um ein für den Fahrer möglichst komfortables Bremsgefühl über das Bremspedal 6 zu realisieren, kann während eines Betriebs der elektrisch-regenerativen Bremse 4 Druckmittel in die beiden Druckspeicher 12-I, 12-II abgeleitet werden. Wie in der WO 2011/092308 A1 ausführlicher dargestellt, ist es besonders bevorzugt, zunächst nur den Druckspeicher 12-I des ersten Bremskreises I zu befüllen und anschließend den Druckspeicher 12-II des zweiten Bremskreises II zu befüllen (prinzipiell kann die Reihenfolge auch getauscht werden) . Da die Ableitung des Druckmittels zweckmäßigerweise über das zeitweise Öffnen eines Auslassventils des jeweiligen Bremskreises erfolgt, kann anhand der Öffnungsdauer der Füllstand des Druckspeichers ermittelt werden. Besonders zweckmäßig ist es, eine größere Volumenaufnahme der Radbremsen 2-I-a, 2-I-b der Vorderachse VA dadurch zu berücksichtigen, dass mehr Druckmittel in den Druckspeicher 12-I des Vorderachs-Bremskreises abgeleitet wird. Sobald das Schleppmoment des Generators nachlässt (z.B. weil die Geschwindigkeit des Fahrzeugs unterhalb einer für die Funktion des Generators geeigneten Mindestgeschwindigkeit liegt), kann in den Druckspeichern 12 vorhandenes Druckmittel mittels der Hydraulikpumpe 22 in die Radbremsen 2 gefördert werden, um ein zusätzliches Bremsmoment in den Radbremsen 2 aufzubauen.

Zu Beginn einer Bremsung wird also möglichst nur die elektrisch-regenerative Bremse 4 bzw. ein Generator zur Verzögerung des Kraftfahrzeugs eingesetzt. Hierbei wird ein Auslassventil, z.B. das Ventil 16-I-a eines Rads der Vorderachse, geöffnet und Druckmittel in den Druckspeicher 12-I abgeleitet. Sobald ein vorgegebener Füllstand des Druckspeichers erreicht wird, der z.B. anhand der Öffnungsdauer und des Öffnungsquerschnitts des geöffneten Magnetventils berechnet werden kann, wird Auslassventil 16-I-a wieder geschlossen. Wenn der Fahrer das Pedal nur in einem beschränkten Umfang betätigt (die Betätigung also in einem vorgegebenen Intervall liegt), kann es dazu kommen, dass nur ein Druckspeicher 12-I befüllt ist, während der Druckspeicher 12-II des zweiten Bremskreises II leer ist, da das Bremspedal 6 für eine anschließende Befüllung des zweiten Druckspeichers 12-II noch stärker betätigt werden müsste. Je nach Maß der Betätigung des Bremspedals kann es auch zu einem teilweise gefüllten Druckspeicher 12-II des zweiten Bremskreises II kommen. Bremst der Fahrer mit im Wesentlichen gleichbleibendem Betätigungsweg das Fahrzeug bis zum Stillstand, so wird im Verlauf des Bremsvorgangs die minimale Geschwindigkeit, bei welcher der Generator 4 eine nennenswerte Verzögerung des Kraftfahrzeugs bewirken kann, unterschritten und somit ein Blending erforderlich.

Daraufhin wird ein eventuell wegen des Befüllens der Druckspeicher geöffnetes Auslassventil 16 (wie z.B. Auslassventil 16-I-a) geschlossen, die Trennventile 20-I, 20-II der Bremskreise geschlossen und die Hydraulikpumpe 22 aktiviert, welche im beispielgemäßen Bremssystem als eine Kolbenpumpe mit sechs von einem gemeinsamen elektrischen Antrieb bewegte Kolben ausgeführt ist, wobei jeweils drei Kolben einem Bremskreis zugeordnet sind. Somit wird Druckmittel aus Druckspeicher 12-I in die Radbremsen 2-I-a, 2-I-b der Vorderachse gefördert, um die wegfallende Bremswirkung des Generators zu kompensieren. In Bremskreis II kann wegen eines kaum befüllten oder bereits anfänglich geleerten Druckspeichers 12-II ein Unterdruck entstehen bzw. eine Dampfblasenbildung erfolgen.

Wenn die Entlüftungsbedingung erfüllt ist bzw. die Gefahr einer Dampfblasenbildung erkannt wurde, werden erfindungsgemäß das elektronische Umschaltventil 18-II und das Trennventil 20-II des Bremskreises II mit dem geleerten Druckspeicher 12-II bei laufender Hydraulikpumpe 22 geöffnet. Da die Pedalbetätigung durch den Fahrer in dem Intervall mit geringer Verzögerung liegt und somit der Druckunterschied zwischen Radbremse und Hauptbremszylinder begrenzt ist, bleibt das Pedalgefühl für den Fahrer akzeptabel. Eine nachlassende Generatorverzögerung kann weiterhin durch den Druckaufbau im ersten Bremskreis I kompensiert werden. Es ist vorteilhaft, wenn das elektronische Steuergerät 30 ein Volumenmodell des Druckmittels in Bremskreis II berechnet und die Drehzahl der Hydraulikpumpe entsprechend anpasst.

Nachdem der Fahrer das Bremspedal gelöst hat, werden zweckmäßigerweise das Elektronische Umschaltventil 18-II der Hinterachse und das elektronische Umschaltventil 18-I der Vorderachse kurzzeitig betätigt, damit eventuell in den Druckspeichern 12 vorhandene Bremsflüssigkeit in den Hauptbremszylinder 4 bzw. in den bei unbetätigtem Bremspedal mit dem Hauptbremszylinder verbundenen drucklosen Vorratsbehälter abfließen kann. Weiterhin werden die Trennventile 20-I, 20-II geöffnet. Dies kann sowohl vor, während als auch nach der Öffnung der elektronischen Umschaltventile 18 erfolgen.

Sobald also ein geleerter Druckspeicher während eines Pumpenlaufs erkannt wurde, werden das elektronische Umschaltventil und das Trennventil des entsprechenden Bremskreises geöffnet. Dadurch kann auch bei einer sanften Bremsung in den Stillstand eine Dampfblasenbildung mit potentiell gefährlichen Auswirkungen auf die Bremswirkung vermieden werden.

## Patentansprüche

1. Verfahren, bei dem ein Bremssystem (1) für ein Kraftfahrzeug gesteuert und/oder geregelt wird, das mindestens eine elektrisch-regenerative Bremse (4) und eine oder mehrere Radbremsen (2-I-a, 2-I-b, 2-II-a, 2-II-b) umfasst, welche von einer vom Fahrer mittels eines Bremspedals (6) betätigbaren ersten Druckquelle (8) mit Druckmittel beaufschlagbar und in einem oder mehreren Bremskreisen (I, II) angeordnet sind, wobei mindestens ein Bremskreis (I, II) einen Druckspeicher (12-I, 12-II), eine saugseitig mit dem Druckspeicher (12-I, 12-II) verbundene zweite Druckquelle (22-I, 22-II), insbesondere eine elektrische Hydraulikpumpe, und mindestens zwei ansteuerbare Ventile (20-I, 20-II, 18-I, 18-II) aufweist, wobei sobald eine Aktivierungsbedingung erfüllt ist, in mindestens einem aktiven Bremskreis (I, II) die erste Druckquelle (8) durch Schließen eines ersten Ventils (20-I, 20-II), von den Radbremsen (2-I-a, 2-I-b, 2-II-a, 2-II-b) getrennt wird und mittels einer Aktivierung der zweiten Druckquelle (22-I, 22-II) Druckmittel aus dem Druckspeicher (12-I, 12-II) in mindestens eine Radbremse (2-I-a, 2-I-b, 2-II-a, 2-II-b) gefördert wird, wobei die Aktivierungsbedingung erfüllt ist, wenn das von der elektrisch-regenerativen Bremse (4) aufgebaute und/oder erzielbare Bremsmoment einen vorgegebenen Schwellenwert unterschreitet, **dadurch gekennzeichnet, dass** während des Betriebs der zweiten Druckquelle (22-I, 22-II) ein zwischen dem Druckspeicher (12-I, 12-II) und der ersten Druckquelle (8) angeordnetes zweites Ventil (18-I, 18-II) eines des/der aktiven Bremskreise/s (I, II) sowie das erste Ventil (20-I, 20-II) des selben Bremskreises (I, II) geöffnet wird, wenn eine Entlüftungsbedingung erfüllt ist, wobei die Entlüftungsbedingung nur dann erfüllt ist, wenn in einem vorgegebenen Zeitpunkt oder für eine vorgegebene Zeitdauer nach Erfüllung der Aktivierungsbedingung und/oder Aktivierung der zweiten Druckquelle (22-I, 22-II) die Betätigung eines vom Fahrer betätigten Bremspedals (6) in einem vorgegebenen Intervall liegt, wobei insbesondere ein mit dem Bremspedal verbundener Weg- oder Winkelsensor (24) betrachtet wird.

2. Verfahren nach Anspruch 1, **dadurch gekennzeichnet, dass** die Entlüftungsbedingung nur dann erfüllt ist, wenn der Druckspeicher (12-I, 12-II) mindestens eines ersten Bremskreises (I, II) weniger als ein vorgegebenes Volumen an Druckmittel enthält und/oder die zweite Druckquelle (22-I, 22-II) mindestens eines ersten Bremskreises (I, II) während mindestens einer vorgegebenen Zeitdauer Druckmittel gefördert hat.

3. Verfahren nach mindestens einem der vorhergehenden Ansprüche, **dadurch gekennzeichnet, dass** die Aktivierungsbedingung erfüllt ist, wenn die Betätigung eines vom Fahrer betätigten Bremspedals (6) ein vorgegebenes Maß überschreitet, wobei insbesondere ein mit dem Bremspedal verbundener Weg- oder Winkelsensor (24) betrachtet wird.

4. Verfahren nach mindestens einem der vorhergehenden Ansprüche, **dadurch gekennzeichnet, dass** das Bremssystem einen ersten und einen zweiten Bremskreis (I, II) umfasst, welche jeweils einen Druckspeicher (12-I, 12-II), eine zweite Druckquelle (22-I, 22-II), ein ansteuerbares erstes Ventil (20-I, 20-II), welches zwischen erster Druckquelle (8) und Radbremsen (2-I-a, 2-I-b, 2-II-a, 2-II-b) angeordnet ist, insbesondere ein stromlos geöffnetes Magnetventil, ein ansteuerbares zweites Ventil (18-I, 18-II), welches zwischen Druckspeicher (12-I, 12-II) und erster Druckquelle (8) angeordnet ist, insbesondere ein stromlos geschlossenes Magnetventil, und mindestens ein ansteuerbares drittes Ventil (16), welches zwischen Radbremse (2-I-a, 2-I-b, 2-II-a, 2-II-b) und Druckspeicher (12-I, 12-II) angeordnet ist, insbesondere ein stromlos geschlossenes Magnetventil, aufweisen und dass während eines Bremsvorgangs durch Öffnen eines der dritten Ventile (16) Druckmittel zuerst in den Druckspeicher (12-I) des ersten Bremskreises (I) und anschließend in den Druckspeicher (12-II) des zweiten Bremskreises (II) abgeleitet wird, wobei die Aktivierungsbedingung vorzugsweise nur dann erfüllt sein kann, wenn zumindest in den Druckspeicher (12-I) des ersten Bremskreises (I) Druckmittel abgeleitet wurde.

5. Verfahren nach Anspruch 4, **dadurch gekennzeichnet, dass** die zweite Druckquelle (22-I, 22-II) des ersten und des zweiten Bremskreises (I, II) gleichzeitig aktiviert werden, und dass bei Erfüllung der Entlüftungsbedingung das zweite Ventil (18-II) und das erste Ventil (20-II) des Bremskreises (II) geöffnet werden, welcher den Druckspeicher (12-II) mit dem geringeren Füllstand aufweist, wobei der Füllstand insbesondere anhand einer Dauer und/oder eines Öffnungsquerschnitts und/oder eines Ventilstroms eines der dritten Ventile (16-I-a, 16-I-b, 16-II-a, 16-II-b), welches zumindest zeitweise geöffnet ist, und/oder einer Dauer der Aktivierung und/oder einer die Druckerzeugung charakterisierenden Größe, vorzugsweise einer Drehzahl, der zweiten Druckquelle (22-I, 22-II) ermittelt wird.

6. Verfahren nach Anspruch 4 oder 5, **dadurch gekennzeichnet, dass** die zweiten Ventile (18-I, 18-II) sowohl des ersten (I) als auch des zweiten Bremskreises (II) kurzzeitig geöffnet werden, nachdem das Bremspedal (6) nicht mehr betätigt wird und/oder die zweiten Druckquellen deaktiviert wurden.

7. Verfahren nach mindestens einem der Ansprüche 4 bis 6, **dadurch gekennzeichnet, dass** bei erfüllter Entlüftungsbedingung auch das erste Ventil (20-I) des Bremskreises (I) geöffnet wird, welcher den Druckspeicher (12-I) mit dem höheren Füllstand aufweist.

8. Bremssystem (1) für ein Kraftfahrzeug, umfassend mindestens eine elektrisch-regenerative Bremse (4) und eine oder mehrere, insbesondere vier, Radbremsen (2-I-a, 2-I-b, 2-II-a, 2-II-b), welche von einer vom Fahrer mittels eines Bremspedals (6) betätigbaren ersten Druckquelle (8), insbesondere einem Tandemhauptbremszylinder, mit Druckmittel beaufschlagbar und in einem oder mehreren, insbesondere zwei, Bremskreisen (I, II) angeordnet sind, wobei mindestens ein Bremskreis einen Druckspeicher (12-I, 12-II), eine saugseitig mit dem Druckspeicher (12-I, 12-II) verbundene zweite Druckquelle (22-I, 22-II), insbesondere eine elektrische Hydraulikpumpe, und mindestens zwei ansteuerbare Ventile (20-I, 20-II, 18-I, 18-II) aufweist, und ein elektronisches Steuergerät (30), welches sobald eine Aktivierungsbedingung erfüllt ist, in mindestens einem aktiven Bremskreis (I, II) die erste Druckquelle (8) durch Schließen eines ersten Ventils (20-I, 20-II) von den Radbremsen (2-I-a, 2-I-b, 2-II-a, 2-II-b) trennt und die zweite Druckquelle (22-I, 22-II) aktiviert, wodurch Druckmittel aus dem Druckspeicher (12-I, 12-II) in mindestens eine Radbremse (2-I-a, 2-I-b, 2-II-a, 2-II-b) gefördert wird, wobei die Aktivierungsbedingung erfüllt ist, wenn das von der elektrisch-regenerativen Bremse (4) aufgebaute und/oder erzielbare Bremsmoment ein vorgegebenen Schwellenwert unterschreitet, **dadurch gekennzeichnet dass** das elektronische Steuergerät (30) während des Betriebs der zweiten Druckquelle (22-I, 22-II) ein zwischen dem Druckspeicher (12-I, 12-II) und der ersten Druckquelle (8) angeordnetes zweites Ventil (18-I, 18-II) eines des/der aktiven Bremskreise/s (I, II) sowie das erste Ventil (20-I, 20-II) des selben Bremskreises (I, II) öffnet, wenn eine Entlüftungsbedingung erfüllt ist, wobei die Entlüftungsbedingung nur dann erfüllt ist, wenn in einem vorgegebenen Zeitpunkt oder für eine vorgegebene Zeitdauer nach Erfüllung der Aktivierungsbedingung und/oder Aktivierung der zweiten Druckquelle (22-I, 22-II) die Betätigung eines vom Fahrer betätigten Bremspedals (6) in einem vorgegebenen Intervall liegt, wobei insbesondere ein mit dem Bremspedal verbundener Weg- oder Winkelsensor (24) betrachtet wird.

9. Bremssystem nach Anspruch 8, **dadurch gekennzeichnet, dass** die Entlüftungsbedingung nur dann erfüllt ist, wenn der Druckspeicher (12-I, 12-II) mindestens eines ersten Bremskreises (I, II) weniger als ein vorgegebenes Volumen an Druckmittel enthält und/oder die zweite Druckquelle (22-I, 22-II) mindestens eines ersten Bremskreises (I, II) während mindestens einer vorgegebenen Zeitdauer Druckmittel gefördert hat.

10. Bremssystem nach einem der Ansprüche 8 oder 9, **dadurch gekennzeichnet dass** jeder Radbremse (2-I-a, 2-I-b, 2-II-a, 2-II-b) eines Bremskreises (I, II) ein zwischen erster Druckquelle (8) und Radbremse (2-I-a, 2-I-b, 2-II-a, 2-II-b) angeordnetes Einlassventil (14-I-a, 14-I-b, 14-II-a, 14-II-b), insbesondere ein stromlos geöffnetes Magnetventil, und ein zwischen Radbremse (2-I-a, 2-I-b, 2-II-a, 2-II-b) und Druckspeicher (12-I, 12-II) angeordnetes Auslassventil (16-I-a, 16-I-b, 16-II-a, 16-II-b) zugeordnet sind, wobei die zweite Druckquelle (22-I, 22-II) eines Bremskreises saugseitig mit dem Druckspeicher (12-I, 12-II) verbunden ist und auslassseitig zwischen der ersten Druckquelle (8) und den Einlassventilen (14-I-a, 14-I-b, 14-II-a, 14-II-b) des Bremskreises (I, II) angeordnet ist, dass zwischen der Auslassseite der zweiten Druckquelle (22-I, 22-II) und der ersten Druckquelle (8) ein Trennventil (20-I, 20-II) angeordnet ist, insbesondere ein stromlos geöffnetes Magnetventil, und dass zwischen Saugseite der zweiten Druckquelle (22-I, 22-II) und erster Druckquelle (8) ein Umschaltventil (18-I, 18-II), insbesondere ein stromlos geschlossenes Magnetventil, angeordnet ist, wobei das elektronische Steuergerät (30) in mindestens einem Bremskreis (I, II) jeweils das Trennventil (20-I, 20-II) als das erste Ventil und das Umschaltventil (18-I, 18-II) als das zweite Ventil ansteuert.

11. Bremssystem nach Anspruch 10, **dadurch gekennzeichnet, dass** das elektronische Steuergerät (30) während eines Bremsvorgangs durch Öffnen des Auslassventils (16) Druckmittel zuerst in den Druckspeicher (12-I) des ersten Bremskreises (I) und anschließend in den Druckspeicher (12-II) des zweiten Bremskreises (II) ableitet, wobei die Aktivierungsbedingung vorzugsweise nur dann erfüllt sein kann, wenn zumindest in den Druckspeicher (12-I) des ersten Bremskreises (I) Druckmittel abgeleitet wurde.

12. Bremssystem nach Anspruch 11, **dadurch gekennzeichnet, dass** das elektronische Steuergerät (30) die zweite Druckquelle (22-I, 22-II) des ersten und des zweiten Bremskreises (I, II) gleichzeitig aktiviert, und dass das elektronische Steuergerät (30) bei Erfüllung der Entlüftungsbedingung das zweite Ventil (18-II) und das erste Ventil (20-II) des Bremskreises (II) öffnet, welcher den Druckspeicher (12-II) mit dem geringeren Füllstand aufweist, wobei der Füllstand insbesondere anhand einer Dauer und/oder eines Öffnungsquerschnitts und/oder eines Ventilstroms eines zumindest zeitweise geöffneten Auslassventils (16-I-a, 16-I-b, 16-II-a, 16-II-b) und/oder einer Dauer der Aktivierung und/oder einer die Druckerzeugung charakterisierenden Größe, vorzugsweise einer Drehzahl, der zweiten Druckquelle (22-I, 22-II) durch das elektronische Steuergerät (30) ermittelt wird.

13. Bremssystem nach einem der Ansprüche 11 oder 12, **dadurch gekennzeichnet, dass** das elektronische Steuergerät (30) bei erfüllter Entlüftungsbedingung auch das erste Ventil (20-I) des Bremskreises (I) öffnet, welcher den Druckspeicher (12-I) mit dem höheren Füllstand aufweist.

## Claims

1. Method in which a brake system (1) for a motor vehicle is controlled and/or regulated, which system comprises at least one electric regenerative brake (4) and one or more wheel brakes (2-I-a, 2-I-b, 2-II-a, 2-II-b) to which pressure medium can be supplied from a first pressure source (8) that can be actuated by the driver using a brake pedal (6) and in which one or more brake circuits (I, II) are disposed, wherein at least one brake circuit (I, II) has a pressure accumulator (12-I, 12-II), a second pressure source (22-I, 22-II), in particular an electric hydraulic pump, which is connected to the pressure accumulator (12-I, 12-II) on the suction side, and at least two controllable valves (20-I, 20-II, 18-I, 18-II), wherein, as soon as an activation condition is met, the first pressure source (8) is separated from the wheel brakes (2-I-a, 2-I-b, 2-II-a, 2-II-b) by closing a first valve (20-I, 20-II) in at least one active brake circuit (I, II), and pressure medium is delivered from the pressure accumulator (12-I, 12-II) into at least one wheel brake (2-I-a, 2-I-b, 2-II-a, 2-II-b) by activating the second pressure source (22-I, 22-II), wherein the activation condition is met when the braking torque that is built up by and/or can be attained by the electric regenerative brake (4) drops below a specified threshold value, **characterized in that** a second valve (18-I, 18-II), which is disposed between the pressure accumulator (12-I, 12-II) and the first pressure source (8), of the active brake circuit (s) (I, II), and the first valve (20-I, 20-II) of the same brake circuit (I, II) are opened during the operation of the second pressure source (22-I, 22-II) when a bleeding condition is met, wherein the bleeding condition is met only when the activation of a brake pedal (6) activated by the driver lies in a specified interval at a specified time or for a specified period of time after the activation condition is met and/or after activation of the second pressure source (22-I, 22-II), wherein, in particular, a displacement or angle sensor (24) connected to the brake pedal is considered.

2. Method according to Claim 1, **characterized in that** the bleeding condition is met only when the pressure accumulator (12-I, 12-II) of at least a first brake circuit (I, II) contains less than a specified volume of pressure medium and/or the second pressure source (22-I, 22-II) of at least a first brake circuit (I, II) has delivered pressure medium during at least one specified period of time.

3. Method according to at least one of the preceding claims, **characterized in that** the activation condition is met when the activation of a brake pedal (6) activated by the driver exceeds a specified extent, wherein, in particular, a displacement or angle sensor (24) connected to the brake pedal is considered.

4. Method according to at least one of the preceding claims, **characterized in that** the brake system comprises a first and a second brake circuit (I, II), each of which has a pressure accumulator (12-I, 12-II), a second pressure source (22-I, 22-II), a controllable first valve (20-I, 20-II), in particular a solenoid valve that is open when currentless, which is disposed between a first pressure source (8) and wheel brakes (2-I-a, 2-I-b, 2-II-a, 2-II-b), a controllable second valve (18-I, 18-II), in particular a solenoid valve that is closed when currentless, which is disposed between a pressure accumulator (12-I, 12-II) and the first pressure source (8), and at least one controllable third valve (16), in particular a solenoid valve that is closed when currentless, which is disposed between a wheel brake (2-I-a, 2-I-b, 2-II-a, 2-II-b) and a pressure accumulator (12-I, 12-II), and, during a braking process, pressure medium is first diverted into the pressure accumulator (12-I) of the first brake circuit (I) and subsequently into the pressure accumulator (12-II) of the second brake circuit (II) by opening one of the third valves (16), wherein the activation condition is preferably met only when pressure medium was diverted at least into the pressure accumulator (12-I) of the first brake circuit (I) .

5. Method according to Claim 4, **characterized in that** the second pressure source (22-I, 22-II) of the first and the second brake circuit (I, II) are simultaneously activated, and, when the bleeding condition is met, the second valve (18-II) and the first valve (20-II) of the brake circuit (II) having the pressure accumulator (12-II) with the lower fill level are opened, wherein the fill level is determined, in particular, on the basis of a duration and/or an opening cross-section and/or a valve flow of one of the third valves (16-I-a, 16-I-b, 16-II-a, 16-II-b), which is at least periodically opened, and/or a duration of the activation and/or a variable characterizing the pressure generation, preferably a speed, of the second pressure source (22-I, 22-II).

6. Method according to Claim 4 or 5, **characterized in that** the second valves (18-I, 18-II) of the first (I) as well as the second brake circuit (II) are temporarily opened after the brake pedal (6) is no longer activated and/or if the second pressure sources were deactivated.

7. Method according to at least one of Claims 4 to 6, **characterized in that**, when the bleeding condition is met, the first valve (20-I) of the brake circuit (I) having the pressure accumulator (12-I) with the higher fill level is also opened.

8. Brake system (1) for a motor vehicle, comprising at least one electric regenerative brake (4) and one or more, in particular four, wheel brakes (2-I-a, 2-I-b, 2-II-a, 2-II-b) to which pressure medium can be supplied from a first pressure source (8), in particular a tandem master brake cylinder, that can be actuated by the driver by means of a brake pedal (6), and in which one or more, in particular two, brake circuits (I, II) are disposed, wherein at least one brake circuit has a pressure accumulator (12-I, 12-II), a second pressure source (22-I, 22-II), in particular an electric hydraulic pump, which is connected to the pressure accumulator (12-I, 12-II) on the suction side, and at least two controllable valves (20-I, 20-II, 18-I, 18-II), and an electronic control unit (30), which, as soon as an activation condition is met, separates the first pressure source (8) from the wheel brakes (2-I-a, 2-I-b, 2-II-a, 2-II-b) by closing a first valve (20-I, 20-II) in at least one active brake circuit (I, II), and activates the second pressure source (22-I, 22-II), whereby pressure medium is delivered from the pressure accumulator (12-I, 12-II) into at least one wheel brake (2-I-a, 2-I-b, 2-II-a, 2-II-b), **characterized in that** the electronic control unit (30) opens a second valve (18-I, 18-II), which is disposed between the pressure accumulator (12-I, 12-II) and the first pressure source (8), of the active brake circuit (s) (I, II), and the first valve (20-I, 20-II) of the same brake circuit (I, II) during the operation of the second pressure source (22-I, 22-II) when a bleeding condition is met, wherein the bleeding condition is met only when the activation of a brake pedal (6) activated by the driver lies in a specified interval at a specified time or for a specified period of time after the activation condition is met and/or after activation of the second pressure source (22-I, 22-II), wherein, in particular, a displacement or angle sensor (24) connected to the brake pedal is considered.

9. Brake system according to Claim 8, **characterized in that** the bleeding condition is met only when the pressure accumulator (12-I, 12-II) of at least a first brake circuit (I, II) contains less than a specified volume of pressure medium and/or the second pressure source (22-I, 22-II) of at least a first brake circuit (I, II) has delivered pressure medium during at least one specified period of time.

10. Brake system according to either of Claims 8 and 9, **characterized in that** assigned to each wheel brake (2-I-a, 2-I-b, 2-II-a, 2-II-b) of a brake circuit (I, II) is an inlet valve (14-I-a, 14-I-b, 14-II-a, 14-II-b), in particular a solenoid valve that is open when currentless, disposed between a first pressure source (8) and a wheel brake (2-I-a, 2-I-b, 2-II-a, 2-II-b), and an outlet valve (16-I-a, 16-I-b, 16-II-a, 16-II-b) disposed between a wheel brake (2-I-a, 2-I-b, 2-II-a, 2-II-b) and a pressure accumulator (12-I, 12-II), wherein the second pressure source (22-I, 22-II) of a brake circuit is connected to the pressure accumulator (12-I, 12-II) on the suction side and, on the outlet side, is disposed between the first pressure source (8) and the inlet valves (14-I-a, 14-I-b, 14-II-a, 14-II-b) of the brake circuit (I, II), an isolating valve (20-I, 20-II), in particular a solenoid valve that is open when currentless, is disposed between the outlet side of the second pressure source (22-I, 22-II) and the first pressure source (8), and a switching valve (18-I, 18-II), in particular a solenoid valve that is closed when currentless, is disposed between the suction side of the second pressure source (22-I, 22-II) and the first pressure source (8), wherein the electronic control unit (30) controls the respective isolating valve (20-I, 20-II) as the first valve and the switching valve (18-I, 18-II) as the second valve in at least one brake circuit (I, II).

11. Brake system according to Claim 10, **characterized in that** the electronic control unit (30), during a braking process, diverts pressure medium first into the pressure accumulator (12-I) of the first brake circuit (I) and subsequently into the pressure accumulator (12-II) of the second brake circuit (II) by opening the outlet valve (16), wherein the activation condition is preferably met only when pressure medium was diverted at least into the pressure accumulator (12-I) of the first brake circuit (I).

12. Brake system according to Claim 11, **characterized in that** the electronic control unit (30) simultaneously activates the second pressure source (22-I, 22-II) of the first and the second brake circuit (I, II), and, when the bleeding condition is met, the electronic control unit (30) opens the second valve (18-II) and the first valve (20-II) of the brake circuit (II) having the pressure accumulator (12-II) with the lower fill level, wherein the fill level is determined, in particular, on the basis of a duration and/or an opening cross-section and/or a valve flow of an at least periodically opened outlet valve (16-I-a, 16-I-b, 16-II-a, 16-II-b) and/or a duration of the activation and/or a variable characterizing the pressure generation, preferably a speed, of the second pressure source (22-I, 22-II) by the electronic control unit (30) .

13. Brake system according to either of Claims 11 and 12, **characterized in that**, when the bleeding condition is met, the electronic control unit (30) also opens the first valve (20-I) of the brake circuit (I) having the pressure accumulator (12-I) with the higher fill level.

## Revendications

1. Procédé de commande et/ou de régulation d'un système de freinage (1) pour un véhicule automobile, lequel comporte au moins un frein électriquement régénératif (4) et un ou plusieurs freins de roue (2-I-a, 2-I-b, 2-II-a, 2-II-b), lesquels peuvent être alimentés avec un fluide sous pression par une première source de pression (8) pouvant être actionnée par le conducteur au moyen d'une pédale de frein (6) et sont disposés dans un ou plusieurs circuits de frein (I, II), au moins un circuit de frein (I, II) possédant un accumulateur de pression (12-I, 12-II), une deuxième source de pression (22-I, 22-II) reliée à l'accumulateur de pression (12-I, 12-II) du côté de l'aspiration, notamment une pompe hydraulique électrique, et au moins deux vannes commandables (20-I, 20-II, 18-I, 18-II), procédé selon lequel, dès qu'une condition d'activation est remplie, la première source de pression (8) est déconnectée des freins de roue (2-I-a, 2-I-b, 2-II-a, 2-II-b) dans au moins un circuit de frein (I, II) actif en fermant une première vanne (20-I, 20-II) et du fluide sous pression est refoulé depuis l'accumulateur de pression (12-I, 12-II) dans au moins un frein de roue (2-I-a, 2-I-b, 2-II-a, 2-II-b) au moyen d'une activation de la deuxième source de pression (22-I, 22-II), la condition d'activation étant remplie lorsque le moment de freinage établi et/ou pouvant être atteint par le frein électriquement régénératif (4) devient inférieur à une valeur de seuil prédéfinie, **caractérisé en ce que** pendant le fonctionnement de la deuxième source de pression (22-I, 22-II), une deuxième vanne (18-I, 18-II) disposée entre l'accumulateur de pression (12-I, 12-II) et la première source de pression (8) de l'un du/des circuit (s) de frein (I, II) actif(s) ainsi que la première vanne (20-I, 20-II) du même circuit de frein (I, II) sont ouvertes lorsqu'une condition de purge d'air est remplie, la condition de purge d'air n'étant remplie que lorsqu'à un instant prédéfini ou pendant une durée prédéfinie après que la condition d'activation soit remplie et/ou l'activation de la deuxième source de pression (22-I, 22-II), l'actionnement d'une pédale de frein (6) actionnée par le conducteur se trouve dans un intervalle prédéfini, un capteur de course ou d'angle (24) relié à la pédale de frein étant notamment pris en compte.

2. Procédé selon la revendication 1, **caractérisé en ce que** la condition de purge d'air n'est remplie que lorsque l'accumulateur de pression (12-I, 12-II) d'au moins un premier circuit de frein (I, II) contient moins d'un volume prédéfini de fluide sous pression et/ou la deuxième source de pression (22-I, 22-II) d'au moins un premier circuit de frein (I, II) a refoulé du fluide sous pression pendant au moins une durée prédéfinie.

3. Procédé selon au moins l'une des revendications précédentes, **caractérisé en ce que** la condition d'activation est remplie lorsque l'actionnement d'une pédale de frein (6) actionnée par le conducteur dépasse une cote prédéfinie, un capteur de course ou d'angle (24) relié à la pédale de frein étant notamment pris en compte.

4. Procédé selon au moins l'une des revendications précédentes, **caractérisé en ce que** le système de freinage comporte un premier et un deuxième circuits de frein (I, II), lesquels possèdent respectivement un accumulateur de pression (12-I, 12-II), une deuxième source de pression (22-I, 22-II), une première vanne commandable (20-I, 20-II) qui est disposée entre une première source de pression (8) et les freins de roue (2-I-a, 2-I-b, 2-II-a, 2-II-b), notamment une électrovanne ouverte au repos, une deuxième vanne commandable (18-I, 18-II) qui est disposée entre l'accumulateur de pression (12-I, 12-II) et la première source de pression (8), notamment une électrovanne fermée au repos, et au moins une troisième vanne commandable (16) qui est disposée entre les freins de roue (2-I-a, 2-I-b, 2-II-a, 2-II-b) et l'accumulateur de pression (12-I, 12-II), notamment une électrovanne fermée au repos, et **en ce que** pendant une opération de freinage, en ouvrant la troisième vanne (16), du fluide sous pression est tout d'abord évacué dans l'accumulateur de pression (12-I) du premier circuit de frein (I) et ensuite dans l'accumulateur de pression (12-II) du deuxième circuit de frein (II), la condition d'activation ne pouvant de préférence être remplie que lorsque du fluide sous pression a été évacué dans l'accumulateur de pression (12-I) du premier circuit de frein (I).

5. Procédé selon la revendication 4, **caractérisé en ce que** les deuxièmes sources de pression (22-I, 22-II) du premier et du deuxième circuit de frein (I, II) sont activées simultanément et **en ce que** lorsque la condition de purge d'air est remplie, la deuxième vanne (18-II) et la première vanne (20-II) du circuit de frein (II) qui possède l'accumulateur de pression (12-II) ayant le niveau de remplissage le plus faible est ouverte, le niveau de remplissage étant notamment déterminé à l'aide d'une durée et/ou d'une section transversale d'ouverture et/ou d'un débit de vanne de l'une des troisièmes vannes (16-I-a, 16-I-b, 16-II-a, 16-II-b) qui est au moins temporairement ouverte et/ou d'une durée de l'activation et/ou d'une grandeur caractérisant la génération de pression, de préférence une vitesse de rotation, de la deuxième source de pression (22-I, 22-II).

6. Procédé selon la revendication 4 ou 5, **caractérisé en ce que** les deuxièmes vannes (18-I, 18-II) à la fois du premier (I) et du deuxième circuit de frein (II) sont ouvertes pendant une courte durée après que la pédale de frein (6) n'est plus actionnée et/ou les deuxièmes sources de pression aient été désactivées.

7. Procédé selon au moins l'une des revendications 4 à 6, **caractérisé en ce que** lorsque la condition de purge d'air est remplie, la première vanne (20-I) du circuit de frein (I) qui possède l'accumulateur de pression (12-I) ayant le niveau de remplissage le plus élevé étant elle aussi ouverte.

8. Système de freinage (1) pour un véhicule automobile, comportant au moins un frein électriquement régénératif (4) et un ou plusieurs, notamment quatre, freins de roue (2-I-a, 2-I-b, 2-II-a, 2-II-b), lesquels peuvent être alimentés avec un fluide sous pression par une première source de pression (8) pouvant être actionnée par le conducteur au moyen d'une pédale de frein (6) et sont disposés dans un ou plusieurs, notamment deux, circuits de frein (I, II), au moins un circuit de frein possédant un accumulateur de pression (12-I, 12-II), une deuxième source de pression (22-I, 22-II) reliée à l'accumulateur de pression (12-I, 12-II) du côté de l'aspiration, notamment une pompe hydraulique électrique, et au moins deux vannes commandables (20-I, 20-II, 18-I, 18-II), et un contrôleur électronique (30) qui, dès qu'une condition d'activation est remplie, déconnecte la première source de pression (8) des freins de roue (2-I-a, 2-I-b, 2-II-a, 2-II-b) dans au moins un circuit de frein (I, II) actif en fermant une première vanne (20-I, 20-II) et active la deuxième source de pression (22-I, 22-II), du fluide sous pression étant ainsi refoulé depuis l'accumulateur de pression (12-I, 12-II) dans au moins un frein de roue (2-I-a, 2-I-b, 2-II-a, 2-II-b), la condition d'activation étant remplie lorsque le moment de freinage établi et/ou pouvant être atteint par le frein électriquement régénératif (4) devient inférieur à une valeur de seuil prédéfinie, **caractérisé en ce que** le contrôleur électronique (30), pendant le fonctionnement de la deuxième source de pression (22-I, 22-II), ouvre une deuxième vanne (18-I, 18-II) disposée entre l'accumulateur de pression (12-I, 12-II) et la première source de pression (8) de l'un du/des circuit(s) de frein (I, II) actif(s) ainsi que la première vanne (20-I, 20-II) du même circuit de frein (I, II) lorsqu'une condition de purge d'air est remplie, la condition de purge d'air n'étant remplie que lorsqu'à un instant prédéfini ou pendant une durée prédéfinie après que la condition d'activation soit remplie et/ou l'activation de la deuxième source de pression (22-I, 22-II), l'actionnement d'une pédale de frein (6) actionnée par le conducteur se trouve dans un intervalle prédéfini, un capteur de course ou d'angle (24) relié à la pédale de frein étant notamment pris en compte.

9. Système de freinage selon la revendication 8, **caractérisé en ce que** la condition de purge d'air n'est remplie que lorsque l'accumulateur de pression (12-I, 12-II) d'au moins un premier circuit de frein (I, II) contient moins d'un volume prédéfini de fluide sous pression et/ou la deuxième source de pression (22-I, 22-II) d'au moins un premier circuit de frein (I, II) a refoulé du fluide sous pression pendant au moins une durée prédéfinie.

10. Système de freinage selon l'une des revendications 8 ou 9, **caractérisé en ce qu'**à chaque frein de roue (2-I-a, 2-I-b, 2-II-a, 2-II-b) d'un circuit de frein (I, II) sont associées une vanne d'admission (14-I-a, 14-I-b, 14-II-a, 14-II-b), notamment une électrovanne ouverte au repos, disposée entre la première source de pression (8) et le frein de roue (2-I-a, 2-I-b, 2-II-a, 2-II-b), et une vanne de décharge (16-I-a, 16-I-b, 16-II-a, 16-II-b) disposée entre le frein de roue (2-I-a, 2-I-b, 2-II-a, 2-II-b) et l'accumulateur de pression (12-I, 12-II), la deuxième source de pression (22-I, 22-II) d'un circuit de frein étant reliée à l'accumulateur de pression (12-I, 12-II) du côté de l'aspiration et étant disposée du côté de la décharge entre la première source de pression (8) et les vannes d'admission (14-I-a, 14-I-b, 14-II-a, 14-II-b) du circuit de frein (I, II), **en ce qu'**une vanne de déconnexion (20-I, 20-II), notamment une électrovanne ouverte au repos, est disposée entre le côté de décharge de la deuxième source de pression (22-I, 22-II) et la première source de pression (8), et **en ce qu'**une vanne d'inversion (18-I, 18-II), notamment une électrovanne fermée au repos, est disposée entre le côté aspiration de la deuxième source de pression (22-I, 22-II) et la première source de pression (8), le contrôleur électronique (30) commandant respectivement la vanne de déconnexion (20-I, 20-II) en tant que première vanne et la vanne d'inversion (18-I, 18-II) en tant que deuxième vanne dans au moins un circuit de frein (I, II).

11. Système de freinage selon la revendication 10, **caractérisé en ce que** le contrôleur électronique (30), pendant une opération de freinage, en ouvrant la vanne de décharge (16), évacue du fluide sous pression tout d'abord dans l'accumulateur de pression (12-I) du premier circuit de frein (I) et ensuite dans l'accumulateur de pression (12-II) du deuxième circuit de frein (II), la condition d'activation ne pouvant de préférence être remplie que lorsque du fluide sous pression a été évacué dans l'accumulateur de pression (12-I) du premier circuit de frein (I).

12. Système de freinage selon la revendication 11, **caractérisé en ce que** le contrôleur électronique (30) active simultanément la deuxième source de pression (22-I, 22-II) du premier et du deuxième circuit de frein (I, II), et **en ce que** le contrôleur électronique (30), lorsque la condition de purge d'air est remplie, ouvre la deuxième vanne (18-II) et la première vanne (20-II) du circuit de frein (II) qui possède l'accumulateur de pression (12-II) ayant le niveau de remplissage le plus faible est ouverte, le niveau de remplissage étant notamment déterminé par le contrôleur électronique (30) à l'aide d'une durée et/ou d'une section transversale d'ouverture et/ou d'un débit de vanne d'une vanne de décharge (16-I-a, 16-I-b, 16-II-a, 16-II-b) qui est au moins temporairement ouverte et/ou d'une durée de l'activation et/ou d'une grandeur caractérisant la génération de pression, de préférence une vitesse de rotation, de la deuxième source de pression (22-I, 22-II).

13. Système de freinage selon l'une des revendications 11 ou 12, **caractérisé en ce que** le contrôleur électronique (30), lorsque la condition de purge d'air est remplie, ouvre également la première vanne (20-I) du circuit de frein (I) qui possède l'accumulateur de pression (12-I) ayant le niveau de remplissage le plus élevé.
